# EUROPEAN PATENT APPLICATION

(11) **EP 4 711 637 A1**
(43) Date of publication of application: **18.03.2026**
(21) Application number: 24199637.0
(22) Date of filing: 11.09.2024
(51) Int. Cl.: F16D 1/116, F16H 48/10, F16D 1/10

(54) **AXIAL COUPLING DEVICE**

(71) Applicant: ZF Friedrichshafen AG, 88046 Friedrichshafen (DE)
(72) Inventor: Vizváry, Peter, 917 02 Trnava (SK); Markow, Alexander, 97421 Schweinfurt (DE)
(74) Representative: WBH Wachenhausen Patentanwälte PartG mbB

(57) **Abstract**

The present disclosure relates to a coupling device (1) for providing an axial coupling between a first portion (2) and a second portion (5) that are arrangeable coaxially along an axial axis. The coupling device (1) comprises the first portion (2), a retaining element (10) and at least one securing hole (12) configured to receive a securing element (14). The coupling device (12) is configured to enable the securing element (14) to impart a force perpendicular to the axial axis onto the retaining element (10) when inserted into the securing hole (14). Thus, the retaining element (10) engages with the first portion (2) and the second portion (5) to provide the axial coupling. The present disclosure further relates to a planetary gearset (32) with such a coupling device (1) and a method for assembling such a coupling device (1).

## Description

### Technical field

The present disclosure relates to a coupling device for providing an axial coupling between a first portion and a second portion, a planetary gearset comprising such a coupling device, and a method for assembling said coupling device and said planetary gearset.

### Prior art

Axial couplings between two elements using a variety of mechanical parts are known in the art.

### Description of the invention

In a first aspect, the present disclosure relates to a coupling device for providing an axial coupling between a first portion and a second portion that are arrangeable coaxially along an axial axis. An axial coupling may comprise a coupling along an axial direction, for example a connection between the first portion and the second portion that prevents a relative movement along said axial direction. The axial direction may coincide with the axial axis, which may coincide with a central axis of the first portion and additionally or alternatively of the second portion. An axial coupling may provide a degree of axial play between the two portions or may not provide any play. The first and second portions may be parts of larger elements or structures, or may be individual elements. The first and second portions may be substantially rotationally symmetric along their central axes, and additionally or alternatively be substantially cylindrical. One of the portions may be arrangeable around the other. For example, the first portion may be concentrically arrangeable around the second portion. In some embodiments, the first portion may comprise a bore and the second portion may by formed by a shaft that is arrangeable within the bore.

The coupling device comprises the first portion, a retaining element and at least one securing hole configured to receive a securing element. The retaining element may be an element configured to provide an axial coupling between the first portion and the second portion. The retaining element may be a retaining ring, for example a snap ring or a circlip, a key, or another mechanical element configured to provide an axial coupling. The securing hole may be a circular hole that extends parallel to the axial axis into the first portion. The securing hole may comprise an opening or a gap in the first portion. For example, it may comprise a slot in a wall of the first portion. The securing element is configured to be inserted into the securing hole to engage the retaining element to provide the axial coupling. The securing element may be substantially rotationally symmetric. It may comprise a securing bolt or a pin. The securing bolt may comprise a pointed end with a chamfered guiding surface, which may be configured to ease an insertion. The securing bolt may comprise a section that is narrower than the surrounding section which may be configured to engage with the retaining element. It may be configured to engage with the retaining element such that the securing bolt is prevented from accidentally moving axially. It may be configured such that a click sound may be heard when the securing bolt is positioned such that the retaining element engages with the narrower section, for example because it snaps into place. This may provide a signal that the securing bolt is positioned at the correct depth in the securing hole.

The coupling device is configured to enable the securing element to impart a force perpendicular to the axial axis onto the retaining element when inserted into the securing hole. The coupling device is configured such that the retaining element engages with the first portion and the second portion to provide the axial coupling. The securing element may impart a force onto the retaining element during the insertion and additionally or alternatively while it is inserted into the securing hole. The securing hole may be configured to bring the securing element in contact with the retaining element to impart the force. The contact may also comprise an indirect contact, for example by engaging a pin or a spring that transfers a force to the retaining element. The force perpendicular to the axial axis may be configured to compress, expand, or deform the retaining element such that it engages with the second portion to provide the axial coupling. The force may be entirely perpendicular to the axial axis, or may also comprise an additional component, for example a component parallel to the axial axis. The force may be directed along a radial direction, for example towards the axial axis. The coupling device may comprise a plurality of securing holes and securing elements, for example two, three, four, more or fewer securing holes and securing elements. They may be arranged at equal intervals along a circumference of the first portion.

Through the features described above, first portion and the second portion may be arranged coaxially and coupled axially with only minimal effort, as the assembly of the coupling device may be particularly quick and simple. By providing a coupling device with the features described above, the coupling device may further be particularly compact, especially in a radial direction. It may not be necessary to provide any fastening on an outside of the coupling device, as the securing and the retaining elements may be arranged within or in between the first and the second portion.

In an embodiment, the first portion comprises a groove configured to receive the retaining element and the retaining element comprises a retaining ring. The groove may be an elongated recess arranged on a surface of the first portion. For example, it may comprise a circumferential groove spanning a circumference of the first portion. In particular, it may be a groove that spans a surface of a bore of the first portion. The groove may be substantially circular. The groove may be arranged towards an axial end of the first portion, for example between a main portion and a thinner end portion of the first portion. The groove may be radially wider or narrower than the surrounding portions of the first portion. The groove on the first portion may correspond to a groove on the second portion, for example be arrangeable concentrically to it. The retaining element may be configured to reach into the groove of the second portion to provide the axial coupling. The retaining ring may be a ring-shaped element configured to provide the axial coupling. The retaining ring may comprise a gap and be approximately C-shaped for easing a compression or extension of the ring, thus enabling an easier placement in the groove. The groove may comprise a depth such that the retaining ring does not extend over a rim of the groove in a relaxed state. By providing a groove, the placement and positioning of the retaining element is simplified, as the retaining element may snap into place. Errors in the assembly may also be prevented, as the correct positioning of the retaining element is easier to determine. By providing a retaining ring, the force of the axial coupling may be equally distributed along a circumference of the coupling device, reducing malfunctions of the coupling device.

In an embodiment, the securing hole intersects with the groove to enable a contact between the securing element and the retaining element to impart the force perpendicular to the axial axis. Intersecting may comprise the securing hole and the groove partially sharing a space and additionally or alternatively being in direct contact. The securing hole may intersect the groove such that the securing element may contact the retaining element when it is received in the groove. The securing hole may intersect an outer edge of the groove. The securing element may be configured to compress the retaining element such that it engages the second portion, for example by reaching into the groove of the second portion. Through the features described above, a simpler and more reliable axial coupling device is provided. By providing an intersection between the securing holes and the groove, a direct contact between the securing element and the retaining element is enabled, reducing the chances of errors or failure. This may reduce the number of required components, enabling a lighter, cheaper, and simpler mechanism.

In an embodiment, the securing hole comprises an unlocking section configured to fully receive the securing element such that the securing element does not impart the force on the retaining element. The unlocking section may comprise a continuation of the securing hole along an axial direction, for example parallel to the axial axis. The unlocking section may be arranged on a side opposite to an opening of the securing hole. The unlocking section may be arranged axially behind an intersection with the groove. The unlocking section may be as long or longer than the securing element. The unlocking section may enable the securing element to be pushed further into the securing hole until it no longer imparts a force onto the retaining element, thus unlocking the axial coupling. By providing an unlocking section, a disassembly of the coupling device is simplified. This may also reduce the need for tools, as a disassembly may be performed without or with only minimal tools, for example with only an elongated pin to push the securing elements inwards.

In an embodiment, the first portion comprises a fixing hole configured to receive a fixing element to circumferentially fix the retaining element. The fixing hole may extend parallel to the axial axis. Additionally or alternatively, the fixing hole may extend perpendicular to the axial axis. The fixing hole may intersect the groove. The fixing element may be a pin, for example a slotted pin. The fixing element may circumferentially fix the retaining element by reaching into the gap of the retaining ring, thus preventing circumferential movement. The fixing element may additionally or alternatively impart a force onto the retaining element, preventing circumferential movement. By providing a fixing hole and a fixing element, an undesired circumferential movement of the retaining element is prevented. If the retaining element is a retaining ring with a gap, the fixing element can thus prevent the retaining ring from rotating such that the gap aligns with the securing element. An accidental release of the axial coupling can thus be prevented. Additionally, the fixing hole and fixing element may keep the retaining element in a known position and thereby provide an axial coupling with known properties.

In an embodiment, the first portion comprises teeth configured to mesh with corresponding teeth of the second portion to provide a circumferential coupling for transmitting a torque for driving a vehicle. The teeth may extend parallel to the axial axis and may span the entire circumference of the first portion and the second portion. The first portion may be configured to be arranged around the second portion. The teeth of the first portion may be arranged on a bore and the teeth of the second portion may be arranged on a section of a shaft, such that the section of the shaft may be insertable into the bore and mesh with the teeth. According, through the teeth, a spline coupling between the first portion and the second portion for transmitting a torque may be provided. The circumferential coupling may be configured to provide a torque transmission sufficient to drive the wheels of the vehicle and additionally or alternatively sufficient to receive the torque of an engine, for example an electric motor. The teeth may be interrupted by the grooves and continue axially before and after the grooves. By providing teeth on the first portion, a circumferential coupling is enabled that is durable, simple to assemble, simple to manufacture, compact and cheap. Additionally, a lifetime of the coupling device may be increased as a circumferential slip movement is prevented. Through the features described, a durable and compact axial as well as circumferential coupling is provided. In an embodiment, the coupling device comprises a planet carrier configured to carry a set of planet gears, the planet carrier forming the first portion. The planet carrier may comprise mounting points and additionally or alternatively shafts for planet gears. The planet carrier may be configured to carry two, three, four, more or fewer planets. The planet carrier may be substantially rotationally symmetric. The planet carrier may be substantially produced by a single cast part. The first portion may comprise a cylindrical section that projects from the rest of the planet carrier. The cylindrical section may be monolithic with the planet carrier. To be monolithic may comprise being substantially formed by a single part, for example cast as a single part. The cylindrical section may be arranged along a central axis of the planet carrier, which may correspond to the axial axis. The cylindrical section may comprise a bore configured to receive a shaft. The planet carrier may be configured to transmit a torque to the shaft through the cylindrical section.

In a second aspect, the present disclosure relates to a planetary gearset comprising a coupling device according to the previously described embodiment, a first output shaft for driving a first wheel, a second output shaft for driving a second wheel and an input shaft for providing a torque of an engine. The planetary gearset may comprise a differential or be a part of a differential. The planetary gearset may comprise planet gears, ring gears, sun gears and additionally or alternatively further gears. The planetary gearset may comprise multiple subassembly-gearsets. The planetary gearset may be a part of a drivetrain of a vehicle. The wheels may be a part of the vehicle. The input shaft may be directly coupled with the engine. It may be indirectly coupled with it through a gearbox or additional gearing. The engine may be a combustion engine, an electric motor, a hybrid drive unit or a further type of engine. The input shaft may be a hollow shaft and arranged around the first or the second output shaft. The first and the second output shaft may be coaxial to one another. The first and additionally or alternatively the second output shaft may be coaxial to the input shaft. The planetary gearset is configured to distribute the torque from the input shaft to the two output shafts for driving the first and second wheels. The torque may be distributed equally to the two wheels. The planetary gearset may allow the wheel to rotate at different rotational speed, thus providing a differential function. One of the output shafts forms the second portion and is axially coupled to the planet carrier. The output shaft and the planet carrier may be axially coupled via the coupling device. Further respective features, embodiments and advantages can be found in the descriptions of the first aspect. Conversely, features, embodiments and advantages of the second aspect also represent features, embodiments and advantages of the first aspect. By providing a planetary gearset with the mentioned features, a particularly compact mechanism for driving the wheels of a vehicle may be provided, in particular a compact differential. The mechanism may further be particularly light.

In an embodiment, the planetary gearset comprises a first planetary gearset and a second planetary gearset. The first planetary gearset and the second planetary gearset may comprise subassembly-gearset, meaning that they form parts of the planetary gearset. The first planetary gearset comprises a first element, a second element and a third element. The first element may comprise a sun gear and may be rotatably arranged on the first output shaft. The second element may comprise the planet carrier, which may carry planets which mesh with the sun gear. The planet carrier of the first planetary gearset may be part of the coupling device. The third element may comprise a sun-ring-gear and mesh with the planets carried on the planet carrier of the first planetary gearset. It may function as a ring gear within the first planetary gearset. The second planetary gearset comprises a first element, a second element and a third element. The first element may comprise the sun-ring-gear and may function as a sun gear within the second planetary gearset. The second element may comprise a planet carrier, which may carry planets which mesh with the sun-ring-gear. The third element may comprise a ring gear and mesh with the planets carried on the planet carrier of the second planetary gearset.

The first element of the first gearset is rotationally coupled to the input shaft. Two elements being rotationally coupled may comprise that a rotational movement of one element causes a rotational movement of the rotationally coupled other element. The input shaft may be arranged coaxially around the first output shaft and additionally or alternatively the second output shaft. The second element of the first gearset is rotationally coupled to the first output shaft. It may be coupled to the first output shaft via the coupling device, wherein said second element may form the first portion and the first output shaft may form the second portion of said coupling device. The third element of the first planetary gear set is rotationally coupled to the first element of the second planetary gearset. They may comprise a sun-ring-gear and may additionally or alternatively be formed as a single assembly or monolithically. The second element of the second planetary gearset is non-rotatably fixed to a stationary component. The stationary component may comprise a housing of the planetary gearset. The third element of the second planetary gearset is rotationally coupled to the second output shaft. The first planetary gearset and the second planetary gearset may be arranged concentrically to one another. For example, the second planetary gearset may be arranged around the first planetary gearset.

In a third aspect, the present disclosure relates to a vehicle comprising a planetary gearset according to the second aspect. Further respective features, embodiments and advantages can be found in the descriptions of the first and the second aspect. Conversely, features, embodiments and advantages of the third aspect also represent features, embodiments and advantages of the first and the second aspect. The vehicle may comprise wheels, for example four wheels. The vehicle may be a vehicle used for the transport of people, for example a car. The vehicle may be an agricultural vehicle, for example a tractor. The vehicle may be heavy machinery, for example be a front loader. The planetary gearset may be configured to provide a differential functionality for the wheels of the vehicle.

In a fourth aspect, the present disclosure relates to a method for assembling the coupling device according to the first or the planetary gearset according to the second aspect. Further respective features, embodiments and advantages can be found in the descriptions of the first, the second and the third aspect. Conversely, features, embodiments and advantages of the fourth aspect also represent features, embodiments and advantages of the first, the second and the third aspect. The method comprises mounting the retaining element onto the first portion. Mounting the retaining element may comprise inserting the retaining ring into the groove of the cylindrical section. To insert the retaining ring into the groove may comprise first compressing it, for example through appropriate pliers, such that it may pass through the bore of the cylindrical section. The retaining ring may then be moved into position and released, such that it fits into the groove. Mounting the retaining ring may comprise inserting the fixing pin into the fixing hole to prevent a circumferential movement.

The method further comprises arranging the first portion and the second portion coaxially to one another such that the retaining element is arranged between them. This may comprise moving the shaft forming the second portion into the bore of the first portion. The retaining ring may then be arranged between the two, such that it lies within the groove of the first portion and around the groove of the second portion. Arranging the first portion and the second portion may also comprise meshing the teeth of each to the other. The method further comprises inserting the securing element into the securing hole for imparting a force onto the retaining element such that it engages with the first portion and the second portion. This may comprise inserting a securing bolt into the securing hole until the securing bolt engages with the securing ring and a click sound can be heard. This may cause the retaining ring to compress and thereby extend into the groove of the second portion and provide an axial coupling.

The method may comprise releasing the axial coupling by pushing the securing element into the securing hole until it no longer imparts the force onto the retaining element. This may comprise pushing the securing bolt into the unlocking section of the securing hole. The axial coupling may thereby be released, and the second portion drawn out from the first portion. By providing a method with the described features, a particularly simple and quick assembly and optionally disassembly of the coupling device is provided. The method may be particularly reliable and not be prone to errors. The assembly may be performed without the need of specialized tools.

### Brief description of the figures

Fig. 1 shows a coupling device according to the present disclosure.
Fig. 2 shows a cross section of the coupling device of Fig. 1 coupled with a shaft.
Fig. 3 schematically shows a process of insertion of a securing bolt in the coupling device of Figs. 1 and 2.
Fig. 4 schematically shows a planetary gearset with the coupling device of Figs. 1 and 2.
Fig. 5 schematically shows a method for assembling the coupling device shown in Figs. 1 and 2.
Fig. 6 schematically shows a vehicle with the planetary gearset of Fig. 4.

### Detailed description of the figures

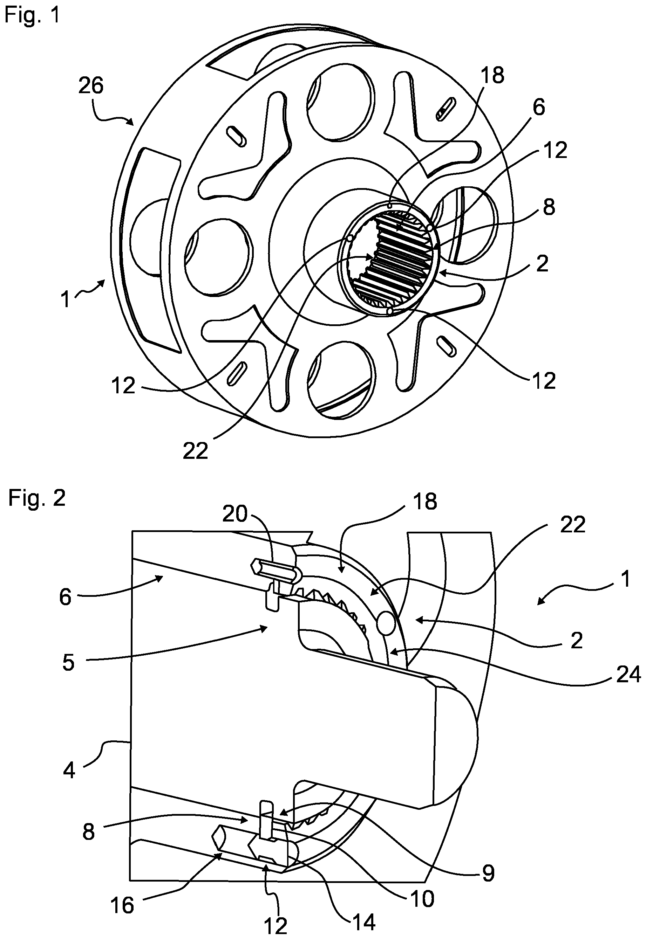

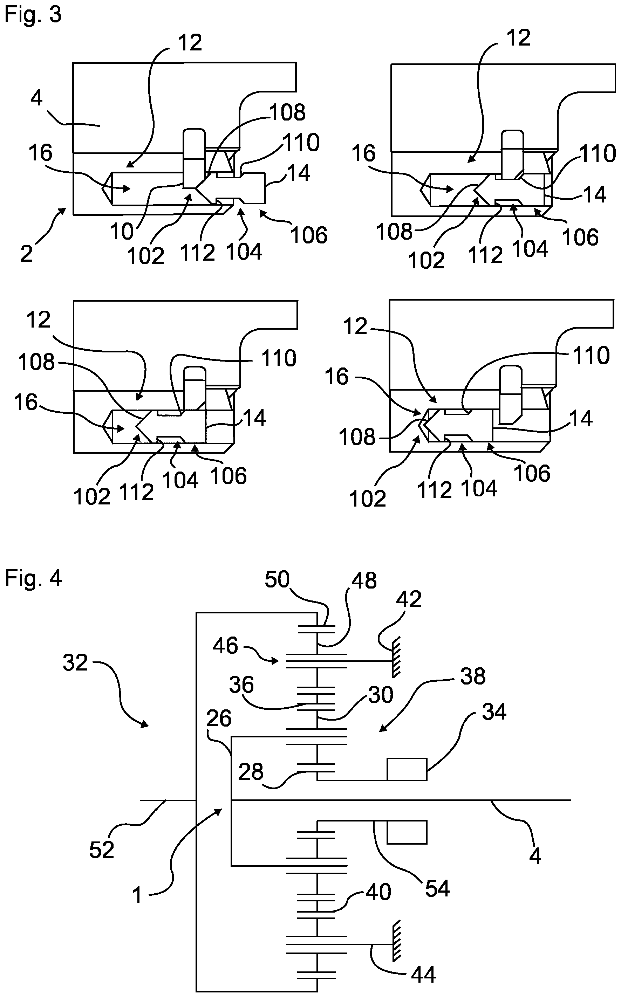

Fig. 1 shows a coupling device 1 according to the present disclosure. The coupling device 1 comprises a planet carrier 26. The planet carrier 26 is configured for mounting of a first set of planet gears 30, which is schematically shown in Fig. 4. The planet carrier 26 comprises a cylindrical section 2, which provides a first element according to the present disclosure. The planet carrier 26 and the cylindrical section 2 are provided here as a single cast part. The cylindrical section 2 comprises a shaft bore 6 configured to receive a shaft 4, which is shown in more detail in Fig. 2. The central axis of the shaft bore 6 coincides with an axial axis according to the present disclosure. The coupling device 1 is substantially rotationally symmetric about the axial axis.

A set of bore teeth 22 is arranged on the surface of the shaft bore 6 along its entire circumference. The bore teeth 22 are configured to mesh with a set of shaft teeth 24 of the shaft 4 to provide a circumferential coupling. According, a spline coupling is provided between the cylindrical section 2 and the shaft 4. The bore teeth 22 extend parallel to the axial axis and are interrupted by a first groove 8. The first groove 8 is arranged coaxially to the shaft bore 6 and spans its entire circumference. The first groove 8 is configured to receive a retaining element, which is provided here as a retaining ring 10 shown in Fig. 2. The retaining ring 10 is substantially ring shaped and comprises a gap, resembling a C-shape. The gap enables a compression and extension of the retaining ring 10, allowing for an easy placement and removal from the first groove 8.

The cylindrical section 2 comprises three securing holes 12, which are arranged at equidistant intervals along the circumference of the cylindrical section 2 and extend parallel to the axial axis. The openings of the securing holes 12 are arranged on a front surface of the cylindrical section 2 opposite to a side of the planet carrier 26 configured for carrying the planet gears 30. The securing holes 12 are configured to each receive a securing element, which is provided here as securing bolts 14, and intersect with an outer edge of the first groove 8. The securing holes 12 intersect the first groove 8 such that the securing bolts 14 can engage with the retaining ring 10 received in the first groove 8, thereby pressing on it and imparting a force perpendicular to the axial axis onto it. The securing bolts 14 thereby compress the retaining ring 10, reducing its diameter such that it extends over a rim of the first groove 8 to engage with the shaft 4. The cylindrical section 2 also comprises a fixing hole 18, which is configured to receive a fixing element provided here by the fixing pin 20. The fixing hole 18 intersects the first groove 8.

Fig. 2 shows a cross section of the cylindrical section 2 of Fig. 1 coupled with the shaft 4. It also shows the retaining ring 10 received in the first groove 8, the securing bolts 14 received in the securing holes 12 and the fixing pin 20 received in the fixing hole 18. The cross section passes through a center of the fixing pin 20 and the securing bolt 14. The shaft 4 is circumferentially coupled with the cylindrical section 2, and therefore with the planetary carrier 26, through the shaft teeth 24 meshing with the bore teeth 22. The bore teeth 22 are arranged on the second portion, which is provided here as the toothed shaft portion 5 and arranged at one end of the shaft 4. The shaft 4 comprises a second groove 9, which spans the entire circumference of the shaft 4 and is configured to engage with the retaining ring 10. The shaft 4 is positioned such that the first groove 8 and the second groove 9 are concentric to one another. The retaining ring 10 is arranged within the first groove 8 and is compressed by the securing bolts 14 such that it reaches into the second groove 9. The shaft 4 and the cylindrical section 2 are thereby axially coupled through the retaining ring 10.

The fixing pin 20 is positioned in the fixing hole 18 and within the gap of the retaining ring 10. It is configured to prevent a circumferential movement of the securing ring 10. In the embodiment shown here, the fixing hole 18 and the securing pin 20 are arranged parallel to the shaft bore 6. In an alternative embodiment, other orientations such as a radial orientation are also possible. The fixing pin 20 is a slotted pin.

A securing bolt 14 is inserted into each securing hole 12. Fig. 3 schematically shows a detailed cross section of one securing bolt 14, illustrating the process of insertion. Four steps of the process are illustrated, with the upper left section showing a process of insertion and the upper right section shown the securing bolt 14 in an inserted state. The lower left section shows a process of releasing the axial coupling and the lower right section shows the securing bolt 14 in the unlocked state. The reference signs of some components are only shown in the upper left section to improve legibility. The securing bolts 14 are rotationally symmetric about a central axis and comprise a pointed end section 102, a narrow section 104 and a wide section 106. The securing bolts 14 have a pointed end section 102 with a sloped guiding surface 108 to ease an insertion into the securing holes 12. The pointed end section 102 is configured to move the securing ring 10 aside as the securing bolts 14 are inserted, thereby compressing it, as illustrated in the upper left section of Fig. 3.

The securing bolts 14 are configured to engage the securing ring 10 with the narrow section 104, pressing onto it and exerting a force perpendicular to and towards the axial axis. This is illustrated in the upper right section of Fig. 3. The securing bolts 104 further comprise a vertical blocking surface 112 configured to engage with the retaining ring 10. The vertical blocking surface 112 thus prevents an accidental axial movement of the securing bolts 14 along the length of the securing holes 12 when in the inserted state. The securing holes 12 are deeper than the length of the securing bolts 14 and comprise an unlocking section 16, into which the securing bolts 14 fit fully. The securing bolts 14 can be pushed into the unlocking section 16, thereby no longer engaging the securing ring 10 and releasing the axial coupling with shaft 4. The wide section 106 comprises a sloped guiding surface 110 to ease the pushing into the unlocking section 16.

Fig. 4 schematically shows a planetary gearset 32 with the coupling device 1 of Figs. 1 and 2. The shaft 4 is coupled with the planet carrier 26, with the details of the coupling device 1 described above but not shown here. The planetary gearset 32 comprises a first output shaft, provided by the shaft 4, and a second output shaft 52. The first output shaft 4 and the second output shaft 52 are each configured to drive a first wheel and a second wheel of a vehicle, respectively. The planetary gearset 32 further comprises an input shaft 54, which is coupled to an engine 34, provided here by an electric motor.

The input shaft 54 is configured to distribute a torque from the engine 34 to the two output shafts 4, 52. The planetary gearset 32 is configured to provide both a differential functionality between the output shafts 4 and 52 and a transmission functionality.

The planetary gearset 32 comprises a first planetary gearset 38 and a second planetary gearset 46, which are arranged coaxially to one another, with the first gearset 38 arranged radially before the second gearset 46. A first element of the first planetary gearset 38, in this case a sun gear 28, is rotationally coupled to the input shaft 54. A second element, in this case the planet carrier 26 of the first planetary gear set 38, is rotationally coupled to the first output shaft 4. A third element of the first planetary gearset 38, in this case a ring gear 36, is rotationally coupled to a first element of the second planetary gearset 46, in this case a sun gear 40. In the present embodiment, the ring gear 36 of the first planetary gearset 38 and the sun gear 40 of the second planetary gearset 46 are designed as a sun-ring-gear, which is formed as a single component. A second element of the second planetary gearset 46, in the present case a planet carrier 44, is non-rotatably fixed to a stationary component so that it cannot rotate. The stationary component is provided here by a housing 42 of the planetary gearset 32. A third element of the second planetary gearset 46, in this case a ring gear 50, is rotationally coupled to the second output shaft 52. Planet gears 30 and 48 are provided on the planet carrier 26 of the first planetary gearset 38 and on the planet carrier 44 of the second planetary gearset 46. They are meshing with the respective sun gears 28, 40 and the respective ring gears 36, 50 of the first 38 and second planetary gearset 46.

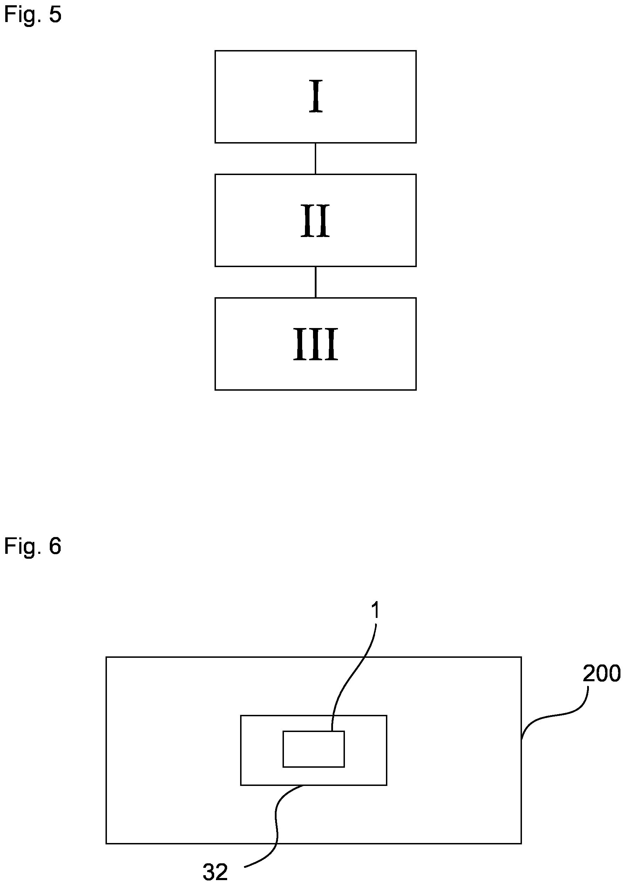

Fig. 5 schematically shows a method for assembling the coupling device 1 shown in Figs. 1 and 2. The method comprises mounting I the retaining ring 10 into the first groove 8 of the cylindrical section 2. This can comprise compressing the retaining ring 10, for example through the use of pliers or other tools, to fit it through the shaft bore 6. Mounting can also comprise a subsequent decompressing of the retaining ring 10 once it is positioned within the first groove 8. The retaining ring 10 can then expand such that it does not obstruct the shaft bore 6. Before mounting the retaining ring 10 into the first groove 8, the fixing pin 20 may be inserted into the fixing hole 18 to prevent a circumferential movement of the retaining ring 10. The position of the fixing pin 20 may correspond to the gap of the retaining ring 10.

The method further comprises arranging II the shaft 4 into the shaft bore 6 of the cylindrical section 2 such that it passes through the retaining ring 10. This can comprise positioning the shaft 4 such that the second groove 9 lines up with the first groove 8. This can also comprise meshing the bore teeth 22 and the shaft teeth 24 to provide a circumferential coupling between the cylindrical section 2 and the shaft 4.

The method further comprises inserting III the securing bolts 14 into the securing holes 12 until they exert a force onto the retaining ring 10 such that it engages with the shaft 4, for example with the shaft groove 9. This may comprise radially compressing the retaining ring 10. The shaft coupling device 1 and the securing bolts 14 may be configured to emit an audible click sound when the securing bolts 14 are positioned to compress the retaining ring 10. This may make an assembly easier, as the correct depth of the securing bolts 14 for axially coupling the shaft 4 and the cylindrical section 2 is more easily determined.

The method may further comprise advancing the securing bolts 14 into the securing holes 12 such that they no longer compress the retaining ring 10, thereby releasing the axial coupling of the cylindrical section 2 with the shaft 4. This may allow a disassembly. In the shown embodiment, the securing bolts 14 are advanced into the unlocking section 16 of the securing holes 12 until they no longer engage the retaining ring 10. The retaining ring 10 may thus expand into the first groove 8 and no longer engage the shaft 4 or the second groove 9. The shaft 4 can then be removed from the shaft coupling device 1 by moving it axially.

Fig. 6 schematically shows a vehicle 200 with the planetary gearset 32 of Fig. 4. The vehicle 200 shown here is a tractor. The planetary gearset 32 comprises the coupling device 1. The planetary gearset 32 is configured to provide a differential functionality and transmit a torque to the wheels of the vehicle 200.

### Reference Signs

- 1: coupling device
- 2: cylindrical section
- 4: shaft
- 5: toothed shaft portion
- 6: shaft bore
- 8: first groove
- 9: second groove
- 10: retaining ring
- 12: securing hole
- 14: securing bolt
- 16: unlocking section
- 18: fixing hole
- 20: fixing pin
- 22: bore teeth
- 24: shaft teeth
- 26, 44: planet carrier
- 28, 40: sun gear
- 30, 48: planet gear
- 32: planetary gearset
- 34: engine
- 36, 50: ring gear
- 38, 46: planetary gearset
- 42: housing
- 52: second output shaft
- 54: input shaft
- 102: pointed end section
- 104: narrow section
- 106: wide section
- 108: sloped guiding surface
- 110: sloped guiding surface
- 112: vertical blocking surface
- 200: vehicle
- I: mounting retaining ring
- II: arranging shaft in shaft bore
- III: inserting securing bolts

## Claims

1. A coupling device (1) for providing an axial coupling between a first portion (2) and a second portion (5) that are arrangeable coaxially along an axial axis, the coupling device (1) comprising the first portion (2), a retaining element (10) and at least one securing hole (12) configured to receive a securing element (14), wherein the coupling device (1) is configured to enable the securing element (14) to impart a force perpendicular to the axial axis onto the retaining element (10) when inserted into the securing hole (14) such that the retaining element (10) engages with the first portion (2) and the second portion (5) to provide the axial coupling.

2. The coupling device (1) according to claim 1, **characterized in that** the first portion (2) comprises a groove (8; 9) configured to receive the retaining element (10) and wherein the retaining element (10) comprises a retaining ring (10).

3. The coupling device (1) according to claim 2, **characterized in that** the securing hole (12) intersects with the groove (8; 9) to enable a contact between the securing element (14) and the retaining element (10) to impart the force perpendicular to the axial axis.

4. The coupling device (1) according to one of the previous claims, **characterized in that** the securing hole (12) comprises an unlocking section (16) configured to fully receive the securing element (14) such that the securing element (14) does not impart the force on the retaining element (10).

5. The coupling device (1) according to one of the preceding claims, **characterized in that** the first portion (2) comprises a fixing hole (18) configured to receive a fixing element (20) to circumferentially fix the retaining element (10).

6. The coupling device (1) according to one of the preceding claims, **characterized in that** the first portion (2) comprises teeth (22; 24) configured to mesh with corresponding teeth (22; 24) of the second portion (5) to provide a circumferential coupling for transmitting a torque for driving a vehicle.

7. The coupling device (1) according to one of the preceding claims, **characterized in that** the coupling device (1) comprises a planet carrier (26) configured to carry a set of planet gears (30), the planet carrier (26) forming the first portion (2).

8. A planetary gearset (32) comprising a coupling device (1) according to claim 7, a first output shaft (4) for driving a first wheel, a second output shaft (52) for driving a second wheel and an input shaft (54) for providing a torque of an engine (34), the planetary gearset (32) being configured to distribute the torque from the input shaft (54) to the two output shafts (4, 52) for driving the first and second wheels, wherein one of the output shafts (4, 52) forms the second portion (5) and is axially coupled to the planet carrier (26).

9. The planetary gearset (32) according to claim 8, **characterized in that** the planetary gearset comprises a first planetary gearset (38) and a second planetary gearset (46), the first planetary gearset (38) comprising a first element (28), a second element (26) and a third element (36) and the second planetary gearset (46) comprising a first element (40), a second element (44) and a third element (50), wherein the first element (28) of the first planetary gearset (38) is rotationally coupled to the input shaft (54), the second element (26) of the first planetary gearset (38) is rotationally coupled to the first output shaft (4), the third element (36) of the first planetary gear set (38) is rotationally coupled to the first element (40) of the second planetary gearset (46), the second element (44) of the second planetary gearset (46) is non-rotatably fixed to a stationary component (42), and the third element of the second planetary gearset (50) is rotationally coupled to the second output shaft (52).

10. Vehicle comprising a planetary gearset (32) according to claim 8 or 9.

11. A method for assembling the coupling device (1) according to one of claims 1 to 7 or the planetary gearsets (32) of one of claims 8 or 9, comprising the steps of mounting (I) the retaining element (10) onto the first portion (2), arranging (II) the first portion (2) and the second portion (5) coaxially to one another such that the retaining element (10) is arranged between them, and inserting (III) the securing element (14) into the securing hole (12) for imparting a force onto the retaining element (10) such that it engages with the first portion (2) and the second portion (5).
